# EUROPÄISCHE PATENTANMELDUNG

(11) **EP 1 249 369 A1**
(43) Veröffentlichungstag der Anmeldung: **16.10.2002**
(21) Anmeldenummer: 02450054.8
(22) Anmeldetag: 11.03.2002
(51) Int. Cl.: B60R 13/02, B60R 11/02

(54) **Innenverkleidungsteil eines Kraftfahrzeuges mit elektrischen Komponenten**

(30) Priorität: 11.04.2001 AT 2842001 U
(71) Anmelder: Steyr-Daimler-Puch Fahrzeugtechnik AG & CO. KG, 8041 Graz (AT)
(72) Erfinder: Honemann, Bernhard G., 8055 Graz (AT)
(74) Vertreter: Kovac, Werner, Dipl.-Ing.

(57) **Zusammenfassung**

Ein Innenverkleidungsteil eines Kraftfahrzeuges mit zumindest einer elektrischen Komponente, besteht aus einem formstabilen Tragteil (20), einer Aussenhaut (21) und einer Zwischenschicht (22). Um bei geringstem Herstellungs- und Montageaufwand volle, auch ästhetischer, Gestaltungsfreiheit bei höchster Benutzerfreundlichkeit zu erreichen, ist
a) Die Komponente (23;33;43) unter der Aussenhaut (21) angeordnet,
b) Die Aussenhaut (21) über der Komponente (23;33;43) durchlässig, und
c) Die Zwischenschicht (22) zur Aufnahme der Komponente (23;33;43) unterbrochen.

Die elektrische Komponente kann elektroakkustisch, visuell oder haptisch sein. Ein Verfahren zur Herstellung ist auch beschrieben.

## Beschreibung

Die Erfindung betrifft einen Innenverkleidungsteil eines Kraftfahrzeuges mit zumindest einer, praktisch aber wohl immer mehreren elektrischen Komponenten, wobei das Innenverkleidungsteil aus einem formstabilen Tragteil, einer Aussenhaut und einer Zwischenschicht besteht. Das Innenverkleidungsteil kann insbesondere ein Armaturenbrett, eine Mittelkonsole, eine Seitenwand- oder Säulenverkleidung oder auch ein Dachhimmel sein; die elektrische Komponente ein analoges oder digitales Anzeigegerät, ein Bildschirm, eine Flüssigkristallanzeige, ein Lautsprecher, eine Kontroll- oder Warnlampe mit oder ohne zugehörige Elektronikkomponenten, gegebenenfalls mit einer Betätigungsfunktion, und auch die zugehörigen Leitungen und Anschlüsse.

Derartige Komponenten werden zur Zeit, einzeln oder in Einheiten zusammengefasst, in Öffnungen des jeweiligen Innenverkleidungsteiles eingebaut, wenn dieses Innenverkleidungsteil in seinem Schichtenaufbau bereits hergestellt und geformt ist. Dazu braucht die Komponente oder Gruppe von Komponenten ein eigenes Gehäuse und jede Öffnung Führungs- und Befestigungsmittel, durchwegs Teile komplizierter Form mit guter Passgenauigkeit. Das und deren Montage bringt erhebliche Fertigungskosten mit sich. Trotzdem bleiben nach Einbau dieser Komponenten Fugen zwischen Ihnen und dem Verkleidungsteil, in denen sich Schmutz sammeln kann.

Ausserdem unterbrechen derartige Einbauten die Oberfläche des Verkleidungsteiles und erschweren so die Reinigung. Diese konventionelle Anordnung schränkt auch die stilistische Gestaltungsfreiheit ein, weil immer auch auf die Zugänglichkeit bei Montage und Austausch Rücksicht zu nehmen ist, was oft mit den Anforderungen im Fahrbetrieb kollidiert. So ist bei Anzeigen etwa auch darauf zu achten, dass ihre Ablesung nicht durch Spiegelungen beeinträchtigt wird.

Es ist somit Aufgabe der Erfindung, diese Nachteile zu vermeiden, und ein Innenverkleidungsteil so zu gestalten, dass bei geringstem Herstellungsund Montageaufwand volle, auch ästhetischer, Gestaltungsfreiheit bei höchster Benutzerfreundlichkeit gegeben ist.

Erfindungsgemäß wird das dadurch erreicht, dass die Komponente unter der Aussenhaut angeordnet, die Aussenhaut über der Komponente durchlässig und die Zwischenschicht zur Aufnahme der Komponente unterbrochen ist. Die Komponente wird so bereits während der Fertigung des Verkleidungsteiles in dieses integriert, wobei die Integrierung bei vielerlei Komponenten wegen deren praktisch unbegrenzter Lebensdauer eine volle und bleibende sein kann. Da dadurch ausserdem auch auf Gehäuse, Öffnungen im Verkleidungsteil und Blenden verzichtet werden kann, sind die Fertigungskosten stark reduziert. Damit wird schließlich volle Gestaltungsfreiheit und eine glatte Oberfläche des Innenverkleidungsteiles erreicht.

Wenn die Integrierung eine volle und bleibende sein kann, ist in einer vorteilhaften Ausführungsform die Komponente bereits bei der Herstellung des Verkleidungsteiles aus Tragteil, Aussenhaut und Zwischenschicht in dieses integriert, (Anspruch 2). Die Komponente ist also eingebettet und umformt. Dazu kann die Komponente, nur mit der fertigen Aussenhaut fest verbunden (Anspruch 3), oder am Tragteil befestigt sein (Anspruch 4). Diese Befestigung kann vor oder nach dem Vereinigen von Tragteil, Zwischenschicht und Aussenhaut erfolgen, im letzteren Fall kann die Komponente austauschbar sein.

Insbesondere kann die Komponente von der Hinterseite des Tragteiles in eine entsprechende Öffnung des Tragteiles eingeführt und mit diesem verbunden sein (Anspruch 5). Dann ist die Komponente an der Hinterseite des Verkleidungsteiles zugänglich und kann dort, wenn sie austauschbar ist, auch entsprechend befestigt sein. Positioniermittel und Klipse zum Zusammenwirken mit entsprechenden Teilen der Komponente sind vorzugsweise an der Hinterseite des Tragteiles vorgesehen (Anspruch 6).

Die einzelne Schichten des Innenverkleidungsteiles können verschieden zusammengesetzt sein. Wenn aus Sicherheits- oder Komfortgründen die Aussenhaut eindrückbar sein soll, besteht die Zwischenschicht aus einem Schaum (Anspruch 7). Der Innenverkleidungsteil kann so in einem Schäumwerkzeug hergestellt werden, in dessen Ober- und Unterteil vorher die Aussenhaut und der Tragteil positioniert werden. Für räumlich sehr tiefe Formen des Innenverkleidungsteiles ist mit Vorteil die Aussenhaut in einem Gelierverfahren in einer Form hergestellt (Anspruch 8). Solche Gelierverfahren sind unter der Bezeichnung slush molding an sich bekannt. Es gestattet auch die Ausbildung verschieden beschaffener Zonen.

Die Beschaffenheit der Aussenhaut des Innenverkleidungsteiles über der jeweiligen Komponente ist dieser anzupassen. Wenn die elektrische Komponente eine elektroakustische ist, ist die Aussenhaut darüber schalldurchlässig (Anspruch 9). Die Schalldurchlässigkeit wird vorzugsweise durch Auswahl von Art und Dicke deren Werkstoffes hergestellt werden, aber auch dadurch, dass die Aussenhaut über der elektroakustischen Komponente perforiert ist (Anspruch 10).

Wenn es sich bei der Komponente um eine visuelle, etwa analoge oder digitale oder Flüsigkristall-(LCD, LED, O-LED) Anzeige handelt, ist die Aussenhaut darüber zumindest durchscheinend (Anspruch 11). Der Grad der Durchsichtigkeit kann von ganz durchsichtig bis durchscheinend oder farbig oder sonstwie gewählt werden. Bei Anzeigen ist der durchscheinende Teil entspiegelt (Anspruch 12), sei es durch eine entsprechende Mikrostruktur, Entspiegelungsschicht oder eingelagerte Pigmente. Er kann sogar leuchtend sein. So können hinsichtlich Bedienungskomfort und Farbgebung alle Wünsche befriedigt werden.

Die Komponenten können auch so ausgeführt sein, dass sie auf Druck auf die Aussenhaut ansprechen (Anspruch 13), wozu die Aussenhaut entsprechend druckdurchlässig ist; in Verfeinerung der Erfindung auch zusätzlich zu einer der anderen Durchlässigkeiten. Weiters kann die Aussenhaut über der Komponente eine haptische Oberflächenbeschaffenheit aufweisen (Anspruch 14), sodass sie beispielsweise auch im Dunklen ertastet werden kann.

In einer sehr vorteilhaften Weiterbildung der Erfindung sind die Komponenten über elektrische Leitungen am oder im Tragteil an das Bordnetz angeschlossen (Anspruch 15). Die Integration der Leitung senkt die Fertigungskosten weiter und erlaubt die spätere Montage des fertigen Verkleidungsteiles. Die Leitungen können je nach gewähltem Fertigungsverfahren, mit Vorteil auch in der Zwischenschicht integriert sein (Anspruch 16).

Dazu gibt es verschiedene Möglichkeiten. Besonders praktisch sind elektrische Leitungen, die als in dem Formteil umspritzte Flachkabel (FFC) (Anspruch 17) oder gar als in dem Formteil integrierte Verbindungen ("Molded Interconnect Devices" = MID) (Anspruch 18) ausgeführt und über einen gemeinsamen Stecker an das Bordnetz angeschlossen sind.

Die Erfindung handelt auch von einem Verfahren zur Herstellung eines aus einem Tragteil, einer Aussenhaut und einer Zwischenschicht bestehenden Innenverkleidungsteiles mit elektrischen Komponenten, wobei die Zwischenschicht in einer Form zwischen Aussenhaut und Tragteil eingebracht und ausgehärtet wird. Unter Ausnützung der Vorteile der Integration wird erfindungsgemäß vor dem Einbringen der Zwischenschicht zwischen Aussenhaut und Tragteil die mindestens eine Komponente eingebracht und festgelegt (Anspruch 19). Dazu wird sie vorzugsweise an der Innenseite des Tragteiles angebracht, beispielsweise angeklebt, bevor der Tragteil mit Aussenhaut und Zwischenschicht vereinigt wird (Anspruch 20).

Für das Herstellen der der jeweiligen Komponente entsprechenden Durchlässigkeit wird in Weiterbildung des erfindungsgemäßen Verfahrens der über der Komponente befindliche Teil der Aussenhaut bereits vor deren Vereinigung mit der Zwischenschicht und dem Formteil hergestellt ist (Anspruch 21). Das kann durch Einsetzen des durchlässigen Teiles erfolgen; wenn die Aussenhaut ein genähtes Lederkleid ist, etwa durch Einnähen. Die erst nachträglich eingebrachte Zwischenschicht gleicht durch die Naht bedingte Dickenunterschiede aus. Wenn die Aussenhaut in einem Gelierverfahren in einer Form gefertigt ist (,slush molding"), wird der durchlässige Teil auch gleich in derselben Form hergestellt (Anspruch 22). Er ist dann mit dem umgebenden undurchlässigen Material vollkommen bündig und kann auch stetig in dieses übergehen.

Im folgenden wird die Erfindung anhand von Abbildungen beschrieben und erläutert. Es stellen dar:
- Fig. 1:: Den Innenraum eines Kraftfahrzeuges, ohne Lenkrad, bei dem verschiedene Innenverkleidungsteile erfindungsgemäß ausgebildet sind,
- Fig. 2:: Ein erstes Ausführungsbeispiel der Erfindung im Schnitt entlang der Ebene AA in Fig. 1, vergrößert,
- Fig. 3:: Ein zweites Ausführungsbeispiel der Erfindung im Schnitt AA,
- Fig. 4:: Ein drittes Ausführungsbeispiel der Erfindung im Schnitt AA,
- Fig. 5:: Ein Werkzeug zur Herstellung eines erfindungsgemäßen Innenverkleidungsteiles zur Erläuterung des Verfahrens.

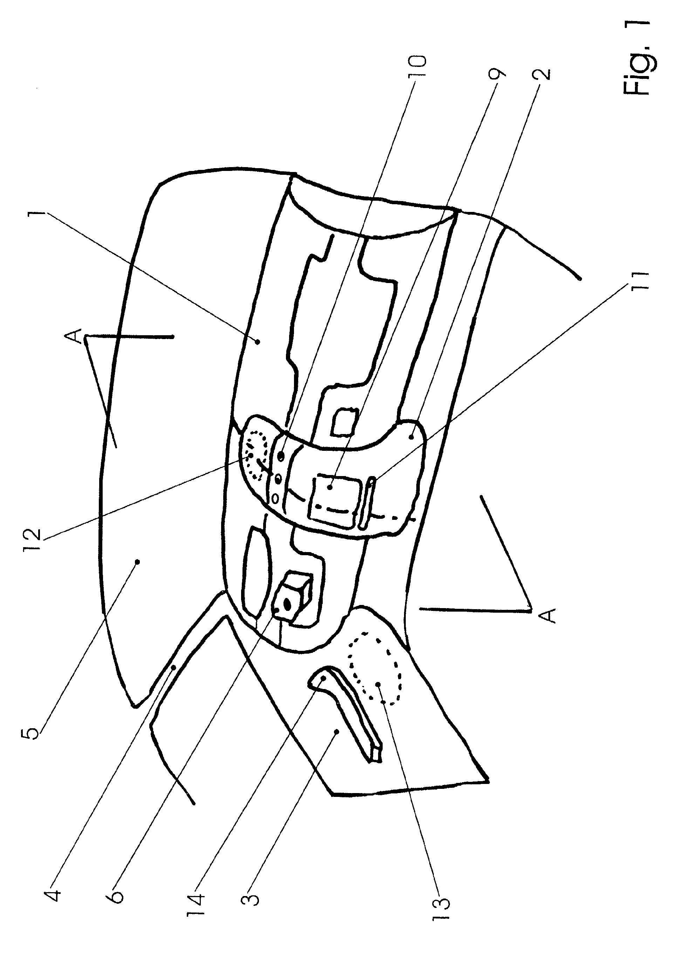

In **Fig. 1** ist ein Armaturenbrett mit 1, eine Mittelkonsole mit 2 und eine Türinnenverkleidung mit 3 bezeichnet. Weiters ist eine A-Säule 4, eine Windschutzscheibe 5 und eine Konsole 6 für das (hier weggelassene) Lenkrad 6 angedeutet. Über der Konsole 6 befindet sich ein Anzeigefeld 8. Die Mittelkonsole 2 enthält einen Bildschirm 9, druckempfindliche Betätigungsfelder 10, weitere Anzeigen 11 und einen Lautsprecher 12. Ein weiterer Lautsprecher 13 und druckempfindliche Felder 14 zur Betätigung beispielsweise der Verstellung eines nicht dargestellten Rückblickspiegels, sind in der Türinnenverkleidung 3 vorgesehen. Weitere Innenverkleidungsteile können ebenfalls in erfindungsgemäßer Weise gestaltet sein. Der Einfachheit halber ist eine Schnittebene AA in vertikaler Fahrzeuglängsrichtung durch die Mittelkonsole 2 gelegt, um die erfindungsgemäßen Details in den folgenden Figuren zu zeigen.

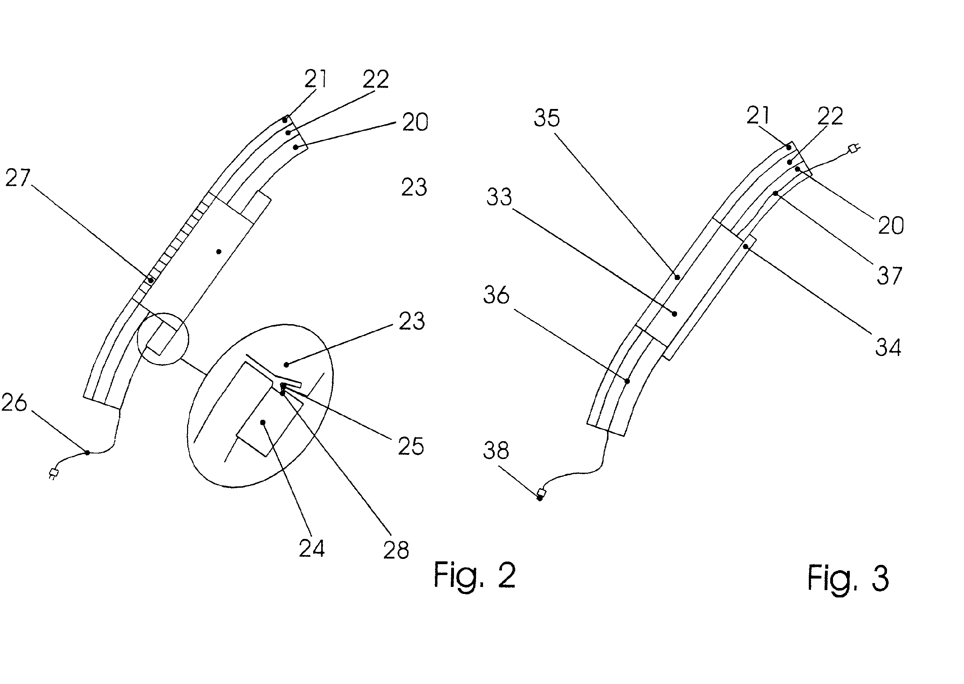

In **Fig. 2** sind die drei Schichten eines erfindungsgemäßen Innenverkleidungsteiles zu erkennen: 20 ist ein Tragteil, das aus Holz, Zellstoff oder Kunststoff bestehen und insbesondere ein Spritzteil sein kann; 21 ist die Aussenhaut, die aus Leder, Kunstleder oder einem geeigneten Kunststoff bestehen und insbesondere in einem Gelierverfahren hergestellt sein kann. Eine Zwischenschicht 22 besteht aus einem weichen, insbesondere schaumförmigen Kunststoff, etwa Polyprophilen oder Polyurethan. Mit 23 ist eine elektrische Komponente, hier ein Lautsprecher einer elektroakustischen Anlage bezeichnet. Dieser ist von hinten durch eine Öffnung im Tragteil 20 und eine entsprechende Ausnehmung in der Zwischenschicht 22 eingeführt und liegt an der Innenseite der Aussenhaut 21 an. Die Komponente 23 wird von einer Halterung 24, die Teil des Tragteiles 20 oder mit diesem fest verbunden ist, gehalten. Die Halterung 24 kann etwa als drei oder vier am Umfang der ovalen oder kreisförmigen elektrischen Komponente 23 verteilte Vorsprünge ausgebildet sein. Der Befestigung dienen beispielsweise Klipse 25 an der Komponente 23, die federnd an Stufen 28 der Halterung 24 angreifen. Die Komponente 23 kann auf diese Weise austauschbar sein. Die Energiezufuhr zu ihr erfolgt über eine Leitung 26, die an der Aussenseite des Tragteiles 20 angeordnet und befestigt ist.

In **Fig. 3** ist die elektrische Komponente 33 ein Bildschirmanzeigegerät oder ein anderes visuelle Signale abgebendes Gerät. Es besitzt eine hintere Deckplatte 34 und ist vor dem Eindringen der Zwischenschicht 22 oder vor der Verbindung mit der Aussenhaut 21 mit dem Tragteil 20 bleibend verbunden, sei es durch Umspritzen, sei es durch Einkleben oder anders. Die Komponente 33 liegt an der Innenseite der Aussenhaut 21 an. Die Aussenhaut 21 besitzt dort, wo die Komponente 33 anliegt, eine transparente Zone 35. Sie ist durchscheinend bis durchsichtig und kann entspiegelt oder gefärbt sein, was durch Färbung oder andere Behandlung geschehen kann. Diese Zone 35 ist mit der Aussenhaut 21 einstückig oder fest verbunden.

Von der Komponente 33 führt eine Leitung 36, die an der Innenseite des Tragteiles 20 befestigt ist, zu einer Verbindung mit dem nicht dargestellten Bordnetz des Fahrzeuges, symbolisiert durch einen Stecker 38. Da die Komponente 33 mit dem Tragteil 20 fest verbunden ist, kann auch diese Leitung fest mit ihm verbunden sein. Alternativ kann eine auf der anderen Seite der Komponente 33 dargestellte Leitung 37 auch im Inneren des Tragteiles 20 verlegt sein, was vorteilhaft ist, wenn die Verbindung zwischen der Komponente 33 mit dem Tragteil durch Umspritzen bei dessen Herstellung erfolgt. Die Leitung selbst ist hier nur durch eine Linie symbolisiert. In Wahrheit sind es mehrere Leitungen und im gesamten Armaturenbrett sogar sehr viele, die gemeinsam zu einer Steckverbindung 38 geführt sind, sodaß das gesamte Innenverkleidungsteil bei der Montage mit einem Stecker an das Bordnetz angeschlossen werden kann.

Die Leitungen selbst sind im einfachsten Fall als Drähte bzw. Kabelbäumchen ausgebildet. Die Nutzung moderner Verdrahtungstechnologien, umspritzte Flachkabel (FFC) oder Verbindungselemente (=MID) bietet hier jedoch ganz besondere zusätzliche Vorteile.

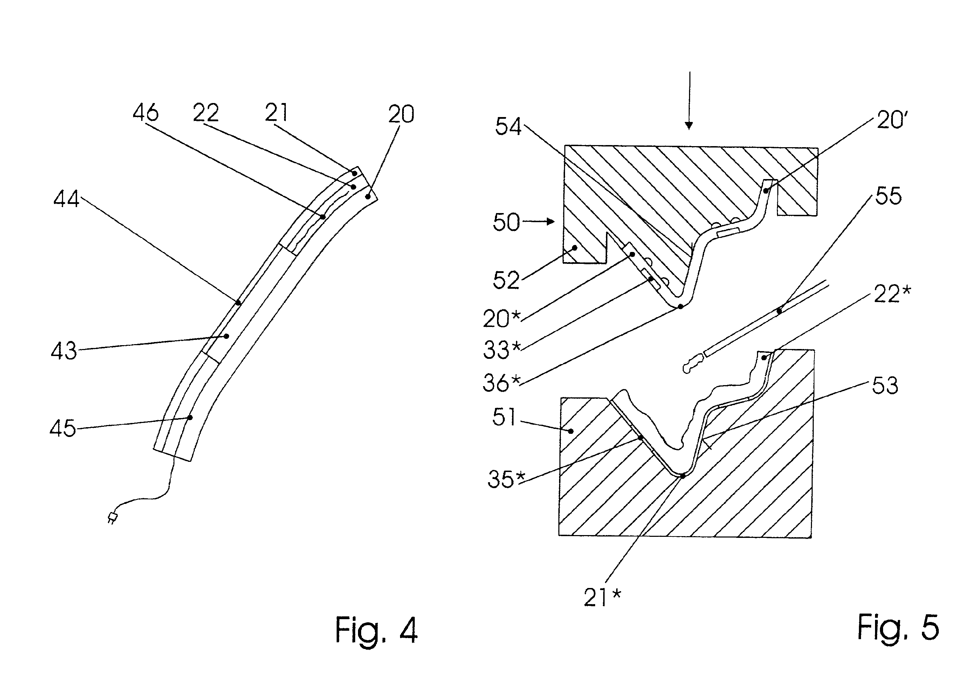

In **Fig. 4** ist die elektrische Komponente 43 ein etwa als Schalter dienender Drucksensor, der zwischen dem Tragteil 20 und der Aussenhaut 21 liegt. Letztere ist, soferne sie nicht insgesamt schon weich genug ist, mit einer unter von aussen ausgeübtem Druck nachgebenden Zone 44 versehen. Die Komponente 43 ist fest mit der Aussenhaut 21 verbunden und wird bei der Herstellung erst nach Auflegen auf die Tragschicht 20 umschäumt. Dabei wird der Leiter 45 entweder an die der Aussenhaut 21 zugeneigte Seite des Tragteiles 20 angedrückt, oder alternativ ein Leiter 46 direkt umschäumt.

**Fig. 5** zeigt zur Erläuterung des Arbeitsverfahrens eine mögliche Vorrichtung 50 zur Herstellung eines erfindungsgemäßen Innenverkleidungsteiles. Sie besteht aus einer unteren Formhälfte 51 und einer oberen Formhälfte 52 mit Formnestern 53, 54. Die Form ist in geöffneter Stellung gezeigt, eine Düse 55 ist für die Einbringung und Verteilung der die schaumige Zwischenschicht 22 bildenden Masse nur angedeutet.

Die Herstellung geht so vor sich: In das Formnest 53 der unteren Form 51 wird die Aussenhaut 21 entweder eingelegt, oder nach einem Gelierverfahren dort, oder in einer anderen Vorrichtung gebildet. Die Aussenhaut 21* mit ihren durchlässigen Zonen 35* liegt in der unteren Formhälfte 51. An der oberen Formhälfte 52 ist der Tragteil 20 befestigt, etwa festgesaugt. Er ist beispielsweise vorher in einer Spritzgußform hergestellt worden und enthält Komponenten 33* Auch Leitungen 36* sind bereits an der Oberfläche des Tragteiles 20 befestigt.

Nun wird durch die Düse 55 Schaummasse in der erforderlichen Flächenverteilung und Menge aufgebracht, sodann wird die Form geschlossen und der Schaum ausgehärtet. Nach Öffnen der Form kann ihr der fertige Innenverkleidungsteil mit den Aggregaten entnommen werden.

Es wird noch darauf hingewiesen, dass die verschiedenen in den Ausführungsbeispielen beschriebenen Detaillösungen auch anders als in den Ausführungsbeispielen kombinierbar sind.

## Patentansprüche

1. Innenverkleidungsteil eines Kraftfahrzeuges mit zumindest einer elektrischen Komponente, wobei das Innenverkleidungsteil aus einem formstabilen Tragteil (20), einer Aussenhaut (21) und einer Zwischenschicht (22) besteht, **dadurch gekennzeichnet, dass**:
a) Die Komponente (23;33;43) unter der Aussenhaut (21) angeordnet,
b) Die Aussenhaut (21) über der Komponente (23;33;43) durchlässig, und
c) Die Zwischenschicht (22) zur Aufnahme der Komponente (23;33;43) unterbrochen ist.

2. Innenverkleidungsteil nach Anspruch 1, **dadurch gekennzeichnet, dass** die Komponente (23;33;43) bei der Herstellung des Verkleidungsteiles aus Tragteil (20), Aussenhaut (21) und Zwischenschicht (22) in dieses integriert wird.

3. Innenverkleidungsteil nach Anspruch 1, **dadurch gekennzeichnet, dass** die Komponente (23;33;43) mit der fertigen Aussenhaut (21) fest verbunden ist.

4. Innenverkleidungsteil nach Anspruch 1, **dadurch gekennzeichnet, dass** die Komponente (23;33;43) am Tragteil (20) befestigt ist.

5. Innenverkleidungsteil nach Anspruch 1, **dadurch gekennzeichnet, dass** die Komponente (23;33;43) von der Hinterseite des Tragteiles (20) in eine entsprechende Öffnung dessen eingeführt mit diesem verbunden ist.

6. Innenverkleidungsteil nach Anspruch 5, **dadurch gekennzeichnet, dass** an der Hinterseite des Tragteiles (20) Positioniermittel (24,28) zum Zusammenwirken mit entsprechenden Teilen (25) der Komponente (23) vorgesehen sind.

7. Innenverkleidungsteil nach Anspruch 1, **dadurch gekennzeichnet, dass** die Zwischenschicht (22) aus einem Schaum besteht.

8. Innenverkleidungsteil nach Anspruch 1, **dadurch gekennzeichnet, dass** die Aussenhaut (21) in einem Gelierverfahren in einer Form hergestellt ist.

9. Innenverkleidungsteil nach Anspruch 1, wobei die elektrische Komponente (23) eine elektroakustische ist, **dadurch gekennzeichnet, dass** die Aussenhaut (21) darüber schalldurchlässig ist.

10. Innenverkleidungsteil nach Anspruch 9, **dadurch gekennzeichnet, dass** die Aussenhaut (21) über der elektroakustischen Komponente (23) Perforationen (27) aufweist.

11. Innenverkleidungsteil nach Anspruch 1, **dadurch gekennzeichnet, dass** die Komponente (33) eine visuelle Anzeige und die Aussenhaut (21) darüber eine zumindest durchscheinende Zone (35) aufweist.

12. Innenverkleidungsteil nach Anspruch 13, **dadurch gekennzeichnet, dass** die durchscheinende Zone (35) entspiegelt ist.

13. Innenverkleidungsteil nach Anspruch 1, **dadurch gekennzeichnet, dass** die Komponente (43) auf Druck auf die Aussenhaut (21) anspricht.

14. Innenverkleidungsteil nach Anspruch 19, **dadurch gekennzeichnet, dass** die Aussenhaut (21) in der Zone (44) über der Komponente (43) eine haptische Oberflächenbeschaffenheit aufweist.

15. Innenverkleidungsteil nach Anspruch 1, **dadurch gekennzeichnet, dass** die Komponente (23;33;43) über elektrische Leitungen (26; 36; 37; 45) am oder im Tragteil (20) an das Bordnetz angeschlossen ist.

16. Innenverkleidungsteil nach Anspruch 1, **dadurch gekennzeichnet, dass** die Komponente (23;33;43) über elektrische Leitungen (46) in der Zwischenschicht (22) an das Bordnetz angeschlossen ist.

17. Innenverkleidungsteil nach Anspruch 15, dessen Formteil aus Kunststoff besteht, **dadurch gekennzeichnet, dass** die elektrischen Leitungen (26; 36; 37; 45) in dem Formteil umspritzte Flachkabel (FFC) sind.

18. Innenverkleidungsteil nach Anspruch 15, dessen Formteil aus Kunststoff besteht, **dadurch gekennzeichnet, dass** die elektrischen Leitungen Leitungen (26; 36; 37; 45) in dem Formteil integrierte MID sind.

19. Verfahren zur Herstellung eines aus einem Tragteil (20), einer Aussenhaut (21) und einer Zwischenschicht (22) bestehenden Innenverkleidungsteiles mit elektrischen Komponenten (23;33;43), wobei die Zwischenschicht (22) in einer Form zwischen Aussenhaut (21) und Tragteil (20) eingebracht und ausgehärtet wird, **dadurch gekennzeichnet, dass** vor dem Einbringen der Zwischenschicht (22) zwischen Aussenhaut (21) und Tragteil (20) die mindestens eine Komponente (23;33;43) eingebracht und festgelegt wird.

20. Verfahren zur Herstellung eines Innenverkleidungsteiles nach Anspruch 1, **dadurch gekennzeichnet, dass** die Komponente (23;33;43) an der Innenseite des Tragteiles (20) angebracht ist, bevor der Tragteil (20) mit Aussenhaut (21) und Zwischenschicht (22) vereinigt wird.

21. Verfahren zur Herstellung eines Innenverkleidungsteiles nach Anspruch 19, **dadurch gekennzeichnet, dass** der über der Komponente (23;33;43) befindliche durchscheinende Zone (35) der Aussenhaut (21) bereits vor deren Vereinigung mit der Zwischenschicht (22) und dem Tragteil (20) hergestellt ist.

22. Verfahren zur Herstellung eines Innenverkleidungsteiles nach Anspruch 21, wobei die Aussenhaut in einem Gelierverfahren in einer Form hergestellt ist, **dadurch gekennzeichnet, dass** deren durchscheinende Zone (35) in der Form hergestellt ist.
